# EUROPÄISCHE PATENTSCHRIFT

(11) **EP 3 281 288 B1**
(45) Veröffentlichungstag und Bekanntmachung des Hinweises auf die Patenterteilung: **19.12.2018**
(21) Anmeldenummer: 16712332.2
(22) Anmeldetag: 30.03.2016
(51) Int. Cl.: H02M 3/155, H02M 3/156, H02M 1/00

(54) **HYSTERESE-REGELUNG EINES GLEICHSPANNUNGSWANDLERS**
HYSTERESIS CONTROLLED DC-DC CONVERTER
CONVERTISSEUR CC-CC CONTROLE AVEC HYSTERESIS

(30) Priorität: 08.04.2015 DE 102015206243
(43) Veröffentlichungstag der Anmeldung: 14.02.2018
(73) Patentinhaber: Continental Automotive GmbH, 30165 Hannover (DE)
(72) Erfinder: STÖGER, Christian, 1170 Wien (AT)
(86) Internationale Anmeldenummer: PCT/EP2016/056857
(87) Internationale Veröffentlichungsnummer: WO 2016/162243

(56) Entgegenhaltungen:
- US-B1- 7 548 047
- CHUNG H S-H ET AL: "Dynamic Hysteresis Band Control of the Buck Converter With Fast Transient Response", IEEE TRANSACTIONS ON CIRCUITS AND SYSTEMS II: ANALOG AND DIGITALSIGNAL PROCESSING, INSTITUTE OF ELECTRICAL AND ELECTRONICS ENGINEERS INC, 345 EAST 47 STREET, NEW YORK, N.Y. 10017, USA, Bd. 52, Nr. 7, 1. Juli 2005 (2005-07-01), Seiten 398-402, XP011136366, ISSN: 1057-7130, DOI: 10.1109/TCSII.2005.850411

## Beschreibung

Die Erfindung betrifft ein Verfahren zur Hysterese-Regelung eines Ausgangsstroms eines Gleichspannungswandlers auf einen Vorgabewert für einen mittleren Ausgangsstrom und innerhalb eines Hysteresebereichs sowie eine Vorrichtung zur Durchführung des Verfahrens, wobei der Ausgangsstrom gemessen und mit einem ersten und zweiten Referenzwert verglichen wird, wobei ein Schalter des Gleichspannungswandlers abhängig von einem ersten Referenzzeitpunkt, zu dem der Ausgangsstrom den ersten Referenzwert erreicht, und einem zweiten Referenzzeitpunkt, zu dem der Ausgangsstrom den zweiten Referenzwert erreicht, an den Grenzen des Hysteresebereichs umgeschaltet wird. Dementsprechend weist die Vorrichtung Messmittel zur Überwachung des Ausgangsstroms des Gleichspannungswandlers und Schaltmittel zum Umschalten eines Schalters des Gleichspannungswandlers auf, wobei die Messmittel mit Vergleichsmitteln zum Vergleichen des gemessenen Ausgangsstroms mit einem ersten und einem zweiten Referenzwert verbunden sind, wobei die Vergleichsmittel eingerichtet sind, ein Erreichen des ersten oder zweiten Referenzwerts zu signalisieren.

Bei der Verwendung von Gleichspannungswandlern zur Konstant-Stromversorgung veränderlicher Lasten ist eine Regelung unverzichtbar, um die Ausgangsspannung des Wandlers der sich ändernden Lastimpedanz anpassen zu können. Typische Stromregler, z.B. PI-Regler, können zwar langsame Effekte, wie temperatur- oder alterungsabhängige Effekte, und unter Umständen langsam schwankende Eingangsspannungen kompensieren, mit schnell veränderlichen Lasten, wie sie beispielsweise bei LED-Gruppen auftreten, können sie jedoch wegen der langsamen Reaktion der Integrierschleife nicht umgehen und erzeugen Über- oder Unterströme, was beispielsweise zu einem flackernden Licht führen kann.

Deutlich erfolgversprechender ist in diesem Fall eine Hysterese-Regelung wie oben angeführt, welche auf das Schaltverhalten des Wandlers Einfluss nimmt, um eine der geänderten Last entsprechende Ausgangsspannung und somit den gewünschten Strom bereitzustellen. Die Zeit zwischen zwei Schaltvorgängen des Wandlers hängt dabei von der Ausgangsspannung ab und kann sich von Zyklus zu Zyklus ändern. Dadurch können auch Verbraucher mit einer sich dynamisch und sehr schnell ändernden Last mit einem einigermaßen konstanten Strom versorgt werden.

Von Nachteil bei einer derartigen Regelung ist, dass der Umschaltzeitpunkt nicht nur vom Strom abhängt, sondern auch von der Ausgangsspannung und von anderen Parametern, wie von Verzögerungen von Komparatoren, der Gate-Spannung des FET-Schalters des Wandlers, der Stärke des Gate-Treibers etc. Aus diesem Grund kommt es so gut wie immer zu Über- und Unterschreitungen des Stromes, wobei die Amplitude der Über- und Unterschreitungen vom Schaltzeitpunkt und vom Anstieg bzw. Abfall des Stroms abhängt. Sowohl Anstieg als auch Abfall des Stroms hängen aber wiederum von der Differenz zwischen Eingangs- und Ausgangsspannung ab, welche beide schwanken. Eine Abweichung des mittleren Stroms vom Vorgabewert ist daher nahezu unvermeidlich.

Die DE 10 2012 223 452 A1 zeigt eine analoge Schaltung, welche eine Abweichung sehr schnell, nämlich von Zyklus zu Zyklus, durch Verschiebung der Grenzwerte kompensiert und somit eine Korrektur des mittleren Stroms erreicht. Von Nachteil ist hierbei, dass nur Über- bzw. Unterschreitungen kompensiert werden, die, verstärkt, größer als eine Diodenspannung sind. Außerdem werden insgesamt vier Verstärkerschaltungen eingesetzt, was die Herstellungskosten im Vergleich zu einer unkompensierten Schaltung (mit zwei Verstärkern/Komparatoren) erhöht.

Die EP 2 741 578 A1 zeigt eine digitale Kompensation der Über- bzw. Unterschreitungen durch eine Registrierung des Durchgangs des Stromes durch einen festgelegten mittleren Wert und Kompensation der oberen und unteren Schaltschwellen. Die Schaltung kommt dabei mit nur einem zusätzlichen Komparator im Vergleich zur unkompensierten Schaltung aus.

Aus der Veröffentlichung "Dynamic Hysteresis Band Control of the Buck Converter With Fast Transient Response" von Chung H S-H et al., IEEE Transactions on Circuits and Systems II: Express Briefs, Bd. 52, Nr. 7, Juli 2005, Seiten 398-402, ist ein Verfahren zur Hysterese-Regelung eines Ausgangsstroms eines Gleichspannungswandlers gemäß dem Oberbegriff des Anspruchs 1 bekannt.

Demgegenüber ist es Aufgabe der Erfindung, eine Möglichkeit vorzuschlagen, Abweichungen des mittleren Stroms (d.h. des Mittelwerts des Stroms über einen oder mehrere Zyklen des Gleichspannungswandlers) von einem Vorgabewert zu korrigieren und dabei gegenüber den bekannten Verfahren und Schaltungen eine noch kostengünstigere Herstellung zu ermöglichen.

Ein Aspekt der Erfindung betrifft ein Verfahren zur Hysterese-Regelung eines Ausgangsstroms eines Gleichspannungswandlers auf einen Vorgabewert für einen mittleren Ausgangsstrom und innerhalb eines Hysteresebereichs, wobei der Ausgangsstrom gemessen und mit einem ersten und zweiten Referenzwert verglichen wird, wobei ein Schalter des Gleichspannungswandlers abhängig von einem ersten Referenzzeitpunkt, zu dem der Ausgangsstrom den ersten Referenzwert erreicht, und einem zweiten Referenzzeitpunkt, zu dem der Ausgangsstrom den zweiten Referenzwert erreicht, an den Grenzen des Hysteresebereichs umgeschaltet wird. Der Schalter wird mit einer Zeitverzögerung nach dem zweiten Referenzzeitpunkt umgeschaltet, wobei die Zeitverzögerung in Abhängigkeit von einer Zeitdifferenz zwischen dem ersten Referenzzeitpunkt und dem zweiten Referenzzeitpunkt so gewählt wird, dass eine Zeitspanne, während der der Ausgangsstrom höher als der Vorgabewert ist, und eine Zeitspanne, während der der Ausgangsstrom niedriger als der Vorgabewert ist, ausgeglichen werden.

Die Dauer der Zeitverzögerung wird gemäß dem Verfahren festgelegt, d.h. sie ist grundsätzlich frei wählbar. Die Zeitverzögerung bezeichnet dabei den zeitlichen Abstand zwischen dem zweiten Referenzzeitpunkt und dem ihm zugeordneten zweiten Umschaltzeitpunkt, d.h. in der Regel dem zeitlich auf den zweiten Referenzzeitpunkt folgenden Umschaltzeitpunkt, bevor erneut ein erster Referenzzeitpunkt erreicht wird. Als erster bzw. zweiter Referenzzeitpunkt wird jeweils der Zeitpunkt bezeichnet, zu dem der Ausgangsstrom den jeweiligen Referenzwert erreicht bzw. überschreitet (von oben oder unten), wobei naturgemäß jeder Zyklus mindestens einen ersten und einen zweiten Referenzzeitpunkt aufweist. Für die erfindungsgemäße Ermittlung der Zeitverzögerung sind von dieser - theoretisch unendlichen - Anzahl von ersten und zweiten Referenzzeitpunkten jeweils der letzte (aktuellste) erste bzw. zweite Referenzzeitpunkt vor dem durch die Zeitverzögerung festgelegten Umschaltzeitpunkt gemeint. Zum Umschalten des Schalters wird somit zum zweiten Referenzzeitpunkt die Differenz zum vorangehenden ersten Referenzzeitpunkt und in Abhängigkeit davon die erforderliche Zeitverzögerung ermittelt; anschließend wird beginnend mit dem zweiten Referenzzeitpunkt die ermittelte Zeitverzögerung abgewartet und unmittelbar nach Ablauf der Zeitverzögerung der Schalter umgeschaltet, sodass das Vorzeichen der Änderung des Ausgangsstroms umgekehrt wird. Die gesamten Zeitspannen, während denen der Ausgangsstrom höher bzw. niedriger als der Vorgabewert ist, nähern sich somit im zeitlichen Mittel aneinander an. Sie werden über einen oder mehrere Zyklen des Gleichspannungswandlers, vorzugsweise über jeden Zyklus, d.h. von Zyklus zu Zyklus, ausgeglichen.

Ein weiterer Aspekt der Erfindung betrifft eine Vorrichtung zur Durchführung eines Verfahrens nach einer der oben und im Folgenden genannten Ausführungsformen, mit Messmitteln zur Überwachung des Ausgangsstroms des Gleichspannungswandlers und mit Schaltmitteln zum Umschalten eines Schalters des Gleichspannungswandlers, wobei die Messmittel mit Vergleichsmitteln zum Vergleichen des gemessenen Ausgangsstroms mit einem ersten und einem zweiten Referenzwert verbunden sind, wobei die Vergleichsmittel eingerichtet sind, ein Erreichen des ersten oder zweiten Referenzwerts zu signalisieren. Die Vergleichsmittel sind mit einem Zeitnehmer verbunden, welcher zur Ermittlung einer Zeitdifferenz zwischen den Signalen der Vergleichsmitteln eingerichtet ist, wobei der Zeitnehmer mit Rechenmitteln verbunden ist, welche zur Berechnung einer Zeitverzögerung in Abhängigkeit von der ermittelten Zeitdifferenz eingerichtet sind, nach deren Ablauf der Schalter umzuschalten ist, sodass eine Zeitspanne, während der der Ausgangsstrom höher als der Vorgabewert ist, und eine Zeitspanne, während der der Ausgangsstrom niedriger als der Vorgabewert ist, ausgeglichen werden, und wobei die Rechenmittel mit den Schaltmitteln verbunden sind, sodass der Schalter des Gleichspannungswandlers nach Ablauf der berechneten Zeitverzögerung umgeschaltet werden kann.

Bei der vorliegenden Vorrichtung werden nur zwei Referenzwerte mit dem Ausgangsstrom verglichen; demzufolge werden nur zwei Komparatoren benötigt, d.h. es ist im Vergleich zu einer unkompensierten Regelung kein weiterer Komparator bzw. keine zusätzliche Leistungskomponente erforderlich. Die zusätzliche Funktionalität zur Durchführung des Verfahrens kann durch ausschließlich digitale Komponenten realisiert werden, welche selbst für komplexe Aufgaben auf kleinstem Raum (jedenfalls kleinerem Raum als zusätzliche Leistungskomponenten) untergebracht werden können und erheblich günstiger zu erlangen bzw. herzustellen sind.

Gemäß einer bevorzugten einfachen Variante des Verfahrens wird die Zeitverzögerung als im Wesentlichen gleich der gemessenen Zeitdifferenz ermittelt und zum Ausgleich einer Zeitspanne, während der der Ausgangsstrom höher als der Vorgabewert ist, und einer Zeitspanne, während der der Ausgangsstrom niedriger als der Vorgabewert ist, geändert. In diesem Fall ist eine explizite Berücksichtigung der Referenzwerte oder der Stromänderungsrate in der Berechnung der Zeitverzögerung nicht erforderlich, was die Berechnung vereinfacht.

Vorzugsweise wird die Zeitverzögerung durch lineare Extrapolation der Stromänderung des Ausgangsstroms ausgehend von dem zweiten Referenzzeitpunkt und in Abhängigkeit von der gemessenen Zeitdifferenz, den beiden Referenzwerten des Ausgangsstroms und einem vorgegebenen Grenzwert des Hysteresebereichs ermittelt und zum Ausgleich einer Zeitspanne, während der der Ausgangsstrom höher als der Vorgabewert ist, und einer Zeitspanne, während der der Ausgangsstrom niedriger als der Vorgabewert ist, geändert. Dementsprechend sind die Rechenmittel der Vorrichtung vorzugsweise zur linearen Extrapolation der Stromänderung des Ausgangsstroms eingerichtet. Eine lineare Extrapolation ist besonders einfach zu realisieren. Sie basiert auf der Tatsache, dass die Stromänderung zwischen den Umschaltpunkten der Hysterese-Regelung im Wesentlichen linear verläuft und ist somit eine robuste und jedenfalls im Mittel korrekte Näherung. D.h. die Änderungsrate (mathematisch: die zeitliche Ableitung) des Ausgangsstroms zwischen den Umschaltzeitpunkten an den Grenzen des Hysteresebereichs wird als im Wesentlichen konstant angenommen und mit dem Verhältnis der Differenz zwischen dem zweiten und dem ersten Referenzwert zu der Zeitdifferenz zwischen dem zweiten und dem ersten Referenzzeitpunkt abgeschätzt. Aus der Differenz zwischen dem vorgegebenen Grenzwert des Hysteresebereichs und dem zweiten Referenzwert wird die Zeitverzögerung ermittelt, nach der der Ausgangsstrom ausgehend vom zweiten Referenzzeitpunkt voraussichtlich den Grenzwert erreicht. Je nach Wahl der Referenzwerte kann zur Ermittlung der Zeitverzögerung eine Division der genannten Differenz durch die ermittelte Änderungsrate vorgenommen werden. Die so ermittelte unkorrigierte Zeitverzögerung wird anschließend noch zum Ausgleich der Zeitspannen, während denen der Ausgangsstrom oberhalb bzw. unterhalb des Vorgabewerts ist, geändert, d.h. gegebenenfalls verlängert oder verkürzt.

Weiterhin ist es vorteilhaft, wenn die Zeitdifferenzen zwischen sämtlichen während eines vollständigen Zyklus des Gleichspannungswandlers erreichten Referenzzeitpunkten, zu denen der Ausgangsstrom den jeweiligen Referenzwert erreicht, gemessen werden und aus den gemessenen Zeitdifferenzen, den beiden Referenzwerten und dem Vorgabewert für den mittleren Ausgangsstrom eine erste Zeitspanne, während der der Ausgangsstrom höher als der Vorgabewert war, und eine zweite Zeitspanne, während der der Ausgangsstrom niedriger als der Vorgabewert war, ermittelt werden, wobei die Zeitverzögerung im folgenden Zyklus so geändert wird, dass eine Differenz zwischen der ersten und zweiten Zeitspanne ausgeglichen wird.

In entsprechender Weise ist es vorteilhaft, wenn die Rechenmittel zur Speicherung sämtlicher während eines vollständigen Zyklus des Gleichspannungswandlers ermittelter Zeitdifferenzen zwischen den Signalen der Vergleichsmittel eingerichtet sind und geeignet sind, aus den ermittelten Zeitdifferenzen, den beiden Referenzwerten und dem Vorgabewert für den mittleren Ausgangsstrom eine erste Zeitspanne, während der der Ausgangsstrom höher als der Vorgabewert war, und eine zweite Zeitspanne, während der der Ausgangsstrom niedriger als der Vorgabewert war, zu ermitteln und die Zeitverzögerung im folgenden Zyklus so zu ändern, dass eine Differenz zwischen der ersten und zweiten Zeitspanne ausgeglichen wird. Die Zeitpunkte, zu denen der Ausgangsstrom den Vorgabewert erreicht, können dabei - ebenso wie zumindest einer der Umschaltzeitpunkte - durch Interpolation oder Extrapolation zwischen den beiden Referenzwerten und -zeitpunkten ermittelt werden. Aus der Kenntnis der Umschaltzeitpunkte zwischen den so ermittelten Durchgängen des Ausgangsstroms durch den Vorgabewert kann eine Zuordnung der Zeitspannen zwischen diesen Durchgängen als "oberhalb" bzw. "unterhalb" des Vorgabewerts vorgenommen werden, sodass aus der Differenz der Zeitspannen abgeleitet werden kann, ob der Ausgangsstrom im Mittel für einen längeren Zeitraum höher als der Vorgabewert oder niedriger als der Vorgabewert war. Aufgrund der linearen Stromänderungen führen solche zeitlichen Asymmetrien zu einer entsprechenden Abweichung, d.h. nach oben oder nach unten, des mittleren Stroms vom Vorgabewert. Indem durch eine entsprechende Korrektur der Zeitverzögerung und damit zumindest eines Umschaltzeitpunkts ein Ausgleich dieser Asymmetrien mit dem Ziel einer zeitlich ausgeglichenen Verteilung des Ausgangsstroms oberhalb und unterhalb des Vorgabewerts herbeigeführt wird, kann auch der mittlere Ausgangsstrom korrigiert werden, und er entspricht dann dem Vorgabewert.

Es hat sich als günstig herausgestellt, wenn der zweite Referenzwert dem Vorgabewert des Ausgangsstroms entspricht. In diesem Fall können die Zeitpunkte des Durchgangs durch den Vorgabewert direkt gemessen werden, und sie müssen nicht durch Schätzung auf Basis des ersten und zweiten Referenzzeitpunkts ermittelt werden. Die Zeitspannen, während denen der Ausgangsstrom oberhalb bzw. unterhalb des Vorgabewerts ist, sind somit aus der Messung exakt bekannt, sodass die darauf basierende Korrektur der Zeitverzögerung ebenso exakt vorgenommen werden kann. Der Ausgangsstrom kann folglich im Mittel besonders genau an den Vorgabewert angenähert werden.

Weiterhin ist es vorteilhaft, wenn der erste Referenzwert entweder einem unteren Grenzwert des Hysteresebereichs entspricht, wobei eine Überquerung einer Untergrenze des Hysteresebereichs dem ersten Referenzzeitpunkt entspricht und der Umschaltzeitpunkt an einer Obergrenze des Hysteresebereichs aus der Zeitdifferenz zwischen dem zweiten Referenzzeitpunkt und dem ersten Referenzzeitpunkt sowie der Stromdifferenz zwischen dem zweiten Referenzwert und dem unteren Grenzwert des Hysteresebereichs ermittelt wird, oder - alternativ - einem oberen Grenzwert des Hysteresebereichs entspricht, wobei eine Überquerung einer Obergrenze des Hysteresebereichs dem ersten Referenzzeitpunkt entspricht und der Umschaltzeitpunkt an einer Untergrenze des Hysteresebereichs aus der Zeitdifferenz zwischen dem zweiten Referenzzeitpunkt und dem ersten Referenzzeitpunkt sowie der Stromdifferenz zwischen dem oberen Grenzwert des Hysteresebereichs und dem zweiten Referenzwert ermittelt wird. Bei jeder dieser beiden Alternativen wird eine Zeitverzögerung nur bei einer der beiden Grenzen des Hysteresebereichs eingesetzt, d.h. es ist nur auf einer Seite des Vorgabewerts eine Korrektur der Zeitspannen möglich. Damit trotzdem eine Kompensation in beide Richtungen, d.h. sowohl vor als auch nach Erreichen eines benachbarten Grenzwerts, ermöglicht wird, sollte in diesem Fall der zweite Referenzwert ein Stück weit innerhalb des Hysteresebereichs liegen, d.h. nicht mit einem der Grenzwerte übereinstimmen, z.B. innerhalb der zentralen 95 % relativ zur Spannweite des Hysteresebereichs. Idealer Weise liegt der zweite Referenzwert bzw. Vorgabewert genau in der Mitte des Hysteresebereichs, um den Mittelwert abzubilden. Ein Vorteil dieser beiden Varianten liegt in der einfacheren Implementierung, da ausgehend vom ersten Referenzzeitpunkt keine Zeitverzögerung abgewartet werden muss, sondern der Schalter an dieser Stelle unmittelbar umgeschaltet wird.

Die Erfindung wird nachfolgend anhand eines besonders bevorzugten Ausführungsbeispiels, auf das sie jedoch nicht beschränkt sein soll, und unter Bezugnahme auf die Zeichnungen noch weiter erläutert. In den Zeichnungen zeigen im Einzelnen:
Fig. 1 ein schematisches Blockschaltbild einer an sich herkömmlichen Gleichspannungswandler-Kette zur Versorgung einer LED-Gruppe;
Fig. 2 ein Diagramm des Stromverlaufs bei einem Hysterese-Regler gemäß dem Stand der Technik;
Fig. 3 einen Ausschnitt aus Fig. 2, gemäß dem Bereich III in Fig. 2;
Fig. 4 ein Diagramm des Stromverlaufs bei einem Hysterese-Regler gemäß dem vorliegenden Verfahren;
Fig. 5 ein schematisches Blockschaltbild einer bevorzugten Vorrichtung zur Durchführung des in Fig. 4 illustrierten Verfahrens; und
Fig. 6 in einem Ablaufdiagramm den Ablauf des vorliegenden Verfahrens.

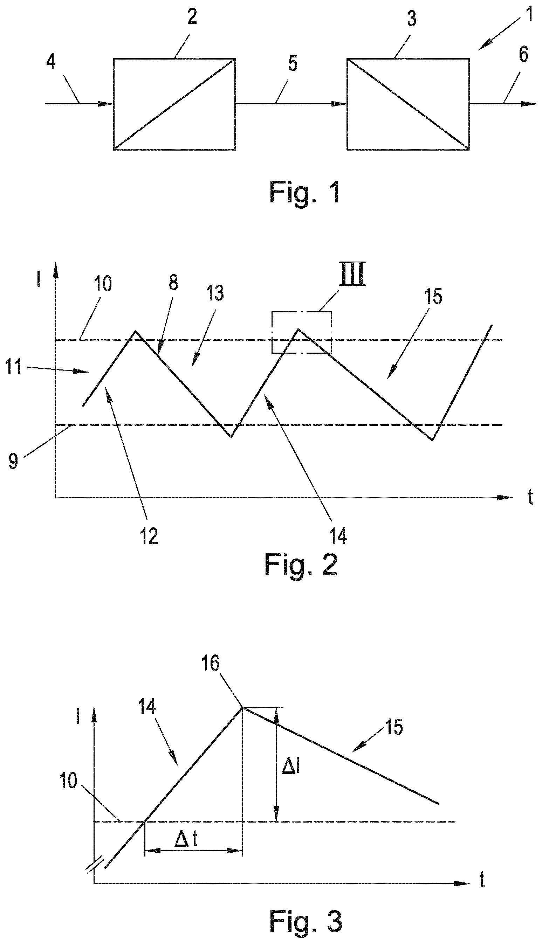

Fig. 1 zeigt den grundsätzlichen Aufbau eines typischen Anwendungsszenarios des vorliegenden Verfahrens bzw. der vorliegenden Vorrichtung. Dabei handelt es sich um einer Kette 1 von Gleichspannungswandlern 2, 3 mit einem Aufwärts-Wandler (Boost-Konverter) 2 und einem Abwärts-Wandler (Buck-Konverter) 3. Der Aufwärts-Wandler 2 ist mit einer (Versorgungs-)Netzspannung 4 verbunden, welche er in eine höhere Zwischenkreisspannung 5 umwandelt. Der Abwärts-Wandler 3 bzw. im Allgemeinen mehrere Abwärts-Wandler sind mit der bereitgestellten Zwischenkreisspannung 5 verbunden und erzeugen davon ausgehend einen vorgegebenen Ausgangsstrom 6. Die Ausgangsspannung des Abwärts-Wandlers 3 wird demzufolge dahingehend geregelt, dass sie je nach angeschlossener Last (nicht abgebildet) einen vordefinierten Ausgangsstrom 6 bewirkt.

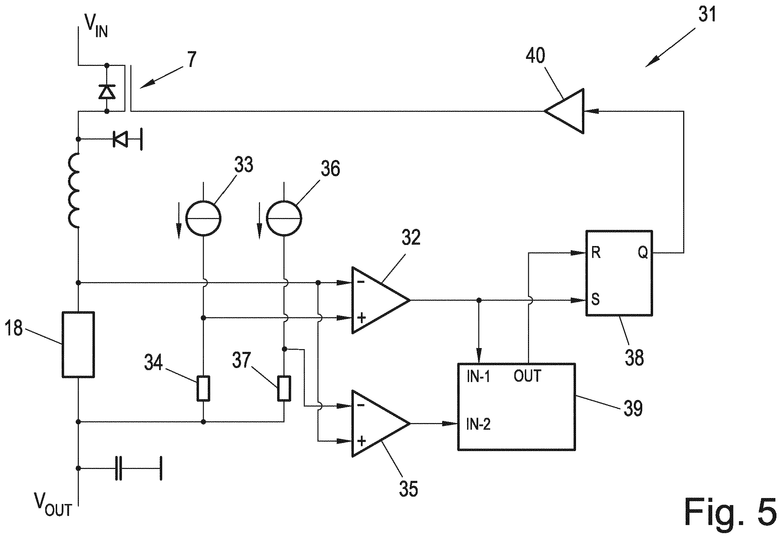

Die Gleichspannungswandler 2, 3 weisen - in an sich bekannter und daher nicht näher gezeigter oder beschriebener Weise - einen im Wesentlichen periodisch arbeitenden Schalter (vgl. Schalter 7 in Fig. 5) und einen oder mehrere Energiespeicher auf. Die gewünschte Ausgangsspannung oder der gewünschte Ausgangsstrom 6 des Abwärts-Wandlers 3 wird durch entsprechende Einstellung oder Regelung der Lade- und Entladezyklen des Energiespeichers erzielt. Ein Verlauf 8 des Ausgangsstroms 6 eines entsprechenden, im Stand der Technik bekannten Hysterese-Reglers ist in Fig. 2 dargestellt. Die Abszisse t ist eine Zeitachse, wobei die Skalierung so gewählt ist, dass etwa zwei volle Lade-/Entladezyklen des Energiespeichers ersichtlich sind. An der Ordinate I ist der Ausgangsstrom 6 des geregelten Wandlers 3 aufgetragen, wobei die beiden horizontalen gestrichelten Linien 9, 10 einen unteren Grenzwert 9 und einen oberen Grenzwert 10 des Ausgangsstroms 6 markieren. Der Bereich zwischen den beiden Grenzwerten 9, 10 ist der Hysteresebereich 11. Der vorgegebene Wert des Ausgangsstroms 6 liegt in der Mitte des Hysteresebereichs 11 zwischen den beiden Grenzwerten 9, 10.

Der dargestellte Stromverlauf 8 beginnt mit einem Ladeabschnitt 12. Sobald der Ausgangsstrom 6 den oberen Grenzwert 10 überschreitet, wird dies durch eine Strommessung erkannt und der Ladeabschnitt 12 darauf beendet und es beginnt ein Entladeabschnitt 13. Dabei kommt es aufgrund einer Schaltverzögerung Δt (vgl. Fig. 3) bei der Messung zu einer Überschreitung des oberen Grenzwerts 10. Dasselbe gilt analog für die Unterschreitung des unteren Grenzwertes 9. Hier wird, sobald der Ausgangsstrom 6 den unteren Grenzwert 9 erreicht, der Entladeabschnitt 13 beendet und ein neuer Ladeabschnitt 14 begonnen. Der Mittelwert des Ausgangsstroms 6 über einen oder mehrere Zyklen soll dem vorgegebenen Wert entsprechen. Dieses Ziel kann hier nur dann erreicht werden, wenn die Überschreitungen und Unterschreitungen der beiden Grenzwerte 10, 9 in einem Zyklus zufällig identisch wären. Dies ist jedoch in der Praxis nicht der Fall, da beispielsweise Schwankungen der Versorgungsspannung 5 und der Last zu sich ständig und schnell verändernden Bedingungen beitragen.

Der Übergang vom zweiten Ladeabschnitt 14 zum zweiten Entladeabschnitt 15 ist in Fig. 2 durch den rechteckigen Bereich III markiert und in Fig. 3 im Detail dargestellt. Die Diagrammachsen t, I in Fig. 3 sind dementsprechend identisch mit Fig. 2. Die horizontale gestrichelte Linie markiert den oberen Grenzwert 10 des Ausgangsstroms 6. Hier ist klar ersichtlich, dass das Umschalten vom Ladeabschnitt 14 in den Entladeabschnitt 15 nicht sofort beim Erreichen des Grenzwerts 10 erfolgt, sondern erst nach einer Schaltverzögerung Δt. Da der Energiespeicher des Abwärts-Wandlers 3 während der Zeit Δt weiterhin geladen wird, steigt auch der Ausgangsstrom 6 weiter. Am Umkehrpunkt 16 zwischen dem Ladeabschnitt 14 und dem Entladeabschnitt 15 erreicht der Ausgangsstrom 6 einen Wert, der um eine Differenz ΔI oberhalb des oberen Grenzwerts 10 liegt. Nach dem Umkehrpunkt 16 muss während des Entladeabschnitts 15 erst das Ausmaß ΔI der Überschreitung entladen werden, bevor der Ausgangsstrom 6 wieder innerhalb, d.h. in diesem Fall unterhalb, des oberen Grenzwerts 10 liegt.

Wie in Fig. 2 und 3 erkennbar, sind die Steigungen des Ladeabschnitts 14 und des Entladeabschnitts 15 im Allgemeinen verschieden. Eine konstante Schaltverzögerung Δt führt somit zu verschiedenen Stromdifferenzen ΔI, wobei die Differenz ΔI desto größer ist, je größer die Steigung des verzögerten Abschnitts 14, 15 ist (wobei dies selbstverständlich auch mit negativem Vorzeichen, d.h. im Bereich des unteren Grenzwertes 9, gilt). Neben der sich ändernden Versorgungsspannung 5 und der sich ändernden Last trägt dieser Effekt ebenfalls zu den Schwankungen der Differenz ΔI bei. Außerdem müssen auch langsamere Veränderungen, beispielsweise aufgrund von Temperatureinflüssen oder Alterungserscheinungen, berücksichtigt werden. Ohne eine zusätzliche Regelung oder Kompensation weicht der Mittelwert des vom Abwärtswandler 3 erzeugten Stroms 6 unter den aufgezählten Einflüssen häufig stark von dem vorgegebenen Wert ab.

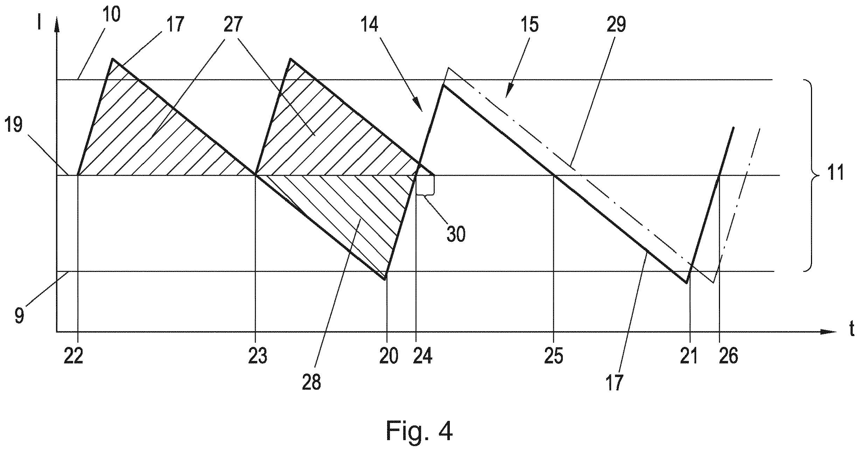

In Fig. 4 ist ein Stromverlauf 17 bzw. ein Spannungsverlauf an einem Shunt-Widerstand 18 (vgl. Fig. 5) bei einer Stromregelung gemäß dem vorliegenden Verfahren dargestellt. Die Abszisse t ist eine Zeitachse, wobei die Skalierung so gewählt ist, dass etwa zwei volle Lade-/Entladezyklen eines Energiespeichers ersichtlich sind. An der Ordinate I ist der Ausgangsstrom 6 des geregelten Wandlers 3 aufgetragen, wobei die beiden horizontalen Linien 9 bzw. 10 einen unteren Grenzwert 9 bzw. einen oberen Grenzwert 10 des Ausgangsstroms 6 markieren. Der Bereich zwischen den beiden Grenzwerten 9, 10 ist der Hysteresebereich 11. Der Vorgabewert 19 des mittleren Ausgangsstroms 6 liegt in der Mitte des Hysteresebereichs 11 zwischen den beiden Grenzwerten 9, 10.

In diesem Ausführungsbeispiel wird der untere Grenzwert 9 als erster Referenzwert und der Vorgabewert 19 als zweiter Referenzwert verwendet. Dementsprechend sind in Fig. 4 die ersten Referenzzeitpunkte 20, 21, zu denen der Ausgangsstrom den unteren Grenzwert 9 erreicht, und die zweiten Referenzzeitpunkte 22 bis 26, zu denen der Ausgangsstrom 6 den Vorgabewert 19 erreicht, eingezeichnet. Damit die Zeitverzögerung des Schaltvorgangs die Schätzung der Stromänderungsrate nicht verfälscht, kann für die ersten Referenzzeitpunkte 20, 21 nur der Durchgang an der ansteigende Flanke des Ausgangsstroms berücksichtigt werden. Das ist vorteilhaft, aber nicht zwingend. Für die zweiten Referenzzeitpunkte 22 bis 26 werden sowohl die Durchgänge an der fallenden als auch an der steigenden Flanke des Ausgangsstroms berücksichtigt. Da hier nicht geschaltet wird, gibt es auch keine spannungsabhängigen verzögernden Komponenten. Der Restfehler (Komparator-Verzögerung) ist für alle positiven (22, 24, 26) und negativen (23, 25) Übergänge gleich und wird daher im Mittel zu Null.

Zur einfacheren Bezugnahme in der folgenden Erläuterung und ohne Beschränkung der Allgemeinheit wird der Zyklus zwischen den Referenzzeitpunkten 22 und 24 als erster Zyklus und der Zyklus zwischen den Referenzzeitpunkten 24 und 26 als zweiter Zyklus bezeichnet.

Der Umschaltzeitpunkt an der unteren Grenze 9 des Hysteresebereichs 11 wird in an sich bekannter Weise ermittelt, d.h. es wird beim Erreichen des unteren Grenzwerts 9 der Schalter 7 umgeschaltet, sodass - nach der unausweichlichen Zeitverzögerung - der Ausgangsstrom wieder ansteigt (vgl. Fig. 2 und zugehörige Beschreibung).

Der Umschaltzeitpunkt an der oberen Grenze 10 des Hysteresebereichs 11 wird jedoch nicht auf diese Weise ermittelt. Stattdessen wird bereits zu Beginn des Ladeabschnitts 14 bei Erreichen des ersten Referenzwerts, d.h. zum Referenzzeitpunkt 20, ein Umschaltzähler zurückgesetzt und gestartet. Danach wird - während der Ausgangsstrom ansteigt - der Umschaltzähler mit einer festgelegten Frequenz inkrementiert. Sobald der zweite Referenzwert erreicht ist, d.h. zum Referenzzeitpunkt 24 in Fig. 4, wird die Zählrichtung des Umschaltzählers umgekehrt, d.h. der Umschaltzähler wird ab diesem Zeitpunkt dekrementiert. Sobald der Umschaltzähler einen mit Null initialisierten Korrekturwert - der daher zunächst als Null angenommen werden kann - erreicht, wird der Schalter 7 umgeschaltet und der Ladeabschnitt 14 beendet, und es beginnt der Entladeabschnitt 15. Der Umschaltzeitpunkt an der oberen Grenze 10 des Hysteresebereichs 11 wird demzufolge aus der Messung einer Zeitverzögerung und dem unmittelbar zuvor implizit ermittelten Anstieg des Ausgangsstroms 6 im Ladeabschnitt 14 ermittelt. Die gemessene Zeitverzögerung beginnt mit dem zweiten Referenzzeitpunkt 24 und dem Umkehren der Zählrichtung. Der Ablauf der Zeitverzögerung löst das Umschalten des Schalters 7 aus. Im vorliegenden besonders einfachen Fall kann aufgrund der Wahl der ersten und zweiten Referenzwerte die Zeitverzögerung ab dem zweiten Referenzzeitpunkt 24 bis zum darauffolgenden Umschaltzeitpunkt als gleich der Zeitspanne zwischen dem ersten Referenzzeitpunkt 20 und dem zweiten Referenzzeitpunkt 24 angenommen werden. Eine Berechnung der Zeitverzögerung auf Basis der Stromdifferenzen und einer ermittelten Stromänderungsrate ist in diesem Fall nicht erforderlich. Im Allgemeinen, d.h. bei anders gewählten Referenzwerten, kann aus den bekannten Referenzwerten und der gemessenen Zeitspanne zwischen dem ersten Referenzzeitpunkt und dem zweiten Referenzzeitpunkt der Stromanstieg pro Zeiteinheit im Ladeabschnitt 14 berechnet werden. Aus der Differenz zwischen dem oberen Grenzwert 10 und dem zweiten Referenzwert kann durch Division durch den ermittelten Stromanstieg die abzuwartende Zeitverzögerung ermittelt werden, damit der Schalter 7 bei Erreichen des oberen Grenzwerts 10 umgeschaltet wird.

Die geschilderte Schätzung des Umschaltzeitpunkts an einer der Grenzen des Hysteresebereichs 11 würde für sich alleine genommen noch nicht zu einem Ausgleich von Schwankungen des Ausgangsstroms führen. Sie bietet jedoch die bereits angedeutete Möglichkeit der Einführung eines Korrekturwerts zur Änderung der Zeitverzögerung, d.h. der Umschaltzeitpunkt kann mithilfe dieses Korrekturwerts zeitlich nach vorne oder nach hinten verschoben werden. Dies entspricht im Ergebnis einer temporären Verschiebung des zugeordneten Grenzwerts, d.h. im vorliegenden Beispiel des oberen Grenzwerts, allerdings ohne die Manipulation einer Lastkomponente erforderlich zu machen. Die Zeitverzögerung kann rein digital berechnet und gemessen werden, wenn der Schalter 7 digital gesteuert wird.

Im vorliegenden Beispiel wird der Korrekturwert durch einen Vergleich der Zeitspannen, während denen der Ausgangsstrom 6 oberhalb bzw. unterhalb des Vorgabewerts 19 ist, ermittelt. Zur Illustration dieser Zeitspannen sind die entsprechenden Bereiche 27, 28 in Fig. 4 unterschiedlich schraffiert. Die Bereiche 27, 28 zwischen dem Stromverlauf 17 und dem Vorgabewert 19 bilden Dreiecke mit im Allgemeinen unterschiedlichen Kantenlängen. Zur visuellen Darstellung des Vergleichs ist in Fig. 4 der Bereich 27 oberhalb des Bereichs 28 nochmals wiedergegeben, was einen direkten Vergleich der Längen der horizontalen Kanten (Seiten) erlaubt, welche den Zeitspannen oberhalb bzw. unterhalb des Vorgabewerts 19 entsprechen. Im abgebildeten Beispiel ist die Zeitspanne des oberen Bereichs 27 länger als jene des unteren Bereichs 28, was bedeutet, dass der Ausgangsstrom 6 im ersten Zyklus für eine vergleichsweise längere Zeitspanne höher als der Vorgabewert 19 war. Grund für diese Abweichung war eine verspätete Umschaltung im ersten Zyklus an der oberen Grenze 10 des Hysteresebereichs 11, was beispielsweise auf eine Laständerung (eine plötzlich geringere Last) zurückzuführen sein kann. Dadurch wurde der mittlere Ausgangsstrom im ersten Zyklus gegenüber dem Vorgabewert 19 angehoben. Ohne eine Korrektur würde - unter der Annahme von keinen weiteren Laständerungen - der Ausgangsstrom 6 dem unkorrigierten Stromverlauf 29 in Fig. 4 folgen. Dabei würde der mittlere Ausgangsstrom zwar im zweiten Zyklus dem Vorgabewert 19 entsprechen, wäre allerdings im Mittel über beide Zyklen immer noch größer als der Vorgabewert 19. Ein effektiver Korrekturwert sollte daher für einen Ausgleich sorgen, sodass der mittlere Ausgangsstrom über beide Zyklen nach dem zweiten Zyklus wieder dem Vorgabewert 19 entspricht.

Der Korrekturwert kann aus einer Messung der Differenz zwischen den Zeitspannen ermittelt werden. Hierbei wird ein Ausgleichszähler zurückgesetzt und gestartet, sobald ein erster Referenzzeitpunkt in einem Ladeabschnitt erreicht wird, d.h. zum Referenzzeitpunkt 22 im ersten Zyklus. Ab diesem Referenzzeitpunkt 22 wird der Ausgleichszähler mit einer festgelegten Frequenz inkrementiert. Sobald ein erster Referenzzeitpunkt in einem Endladeabschnitt erreicht wird, d.h. zum Referenzzeitpunkt 23, wird die Zählrichtung des Ausgleichszählers umgekehrt, d.h. der Ausgleichszähler wird ab diesem Zeitpunkt dekrementiert. Wenn nun der erste Referenzzeitpunkt im folgenden Ladeabschnitt 14 erreicht wird, ist der Wert des Ausgleichszählers proportional zur Differenz 30 der Zeitspannen oberhalb bzw. unterhalb des Vorgabewerts 19. Diese Differenz 30 sollte allerdings nicht direkt als Korrekturwert verwendet werden, sondern mit einem Proportionalitätsfaktor multipliziert werden. Dieser Proportionalitätsfaktor entspricht dem Verhältnis der im Ladeabschnitt 14 oder Entladeabschnitt 15 verbrachten Zeit: der Ladeabschnitt 14 wird aufgrund der größeren Stromänderungsrate weniger verkürzt als der Entladeabschnitt 15 mit einer vergleichsweise geringeren Stromänderungsrate. Der so ermittelte Korrekturwert der Verzögerung ist demzufolge proportional zu der zu lange im Ladeabschnitt 14 verbrachten Zeit. Es ist aus Fig. 4 unmittelbar ersichtlich, dass die Differenz zwischen den Umschaltzeitpunkten des korrigierten Stromverlaufs 17 und des unkorrigierten Stromverlaufs 29 an der obere Grenze des Hysteresebereichs kleiner ist als die Differenz der Zeitspannen der Bereiche 27 und 28.

Eine zur Durchführung einer solchen Hysterese-Regelung, gemäß dem erläuterten Verfahren, eingerichtete Vorrichtung 31 ist in Fig. 5 anhand eines schematischen Blockschaltbilds dargestellt. Dabei sind ein Schalter 7 eines Abwärts-Wandlers 3 (vgl. Fig. 1) sowie ein ausgangsseitig (V_{OUT}) mit dem Abwärts-Wandler 3 verbundener Shunt-Widerstand 18 schematisch angedeutet. Der Schalter 7 ist bevorzugt ein Halbleiterschalter, insbesondere ein FET (FET, Feldeffekttransistor). Mit dem zu einem Last-Stromkreis (nicht gezeigt) gehörenden Shunt-Widerstand 18 ist ein "+"-Eingang eines ersten Komparators 32 verbunden. Dieser Komparator 32 vergleicht den Spannungsabfall am Shunt-Widerstand 18 mit einer ersten Referenzspannung entsprechend einem ersten Referenzwert. Er aktiviert eine Spannung am Ausgang, wenn der erste Referenzwert (am "-"-Eingang des Komparators 32) erreicht oder unterschritten wird. Die erste Referenzspannung wird durch eine erste Referenzstromquelle 33 an einem ersten Referenz-Widerstand 34 gegenüber der Ausgangsspannung V_{OUT} des Abwärts-Wandlers 3 angelegt. Zusätzlich ist mit dem Shunt-Widerstand 18 ein zweiter Komparator 35 (mit dem "-"-Eingang) verbunden. Der zweite Komparator 35 vergleicht den Spannungsabfall am Shunt-Widerstand 18 mit einer (an seinem "+"-Eingang angelegten) zweiten Referenzspannung entsprechend einem zweiten Referenzwert. Er aktiviert eine Spannung am Ausgang, wenn der zweite Referenzwert erreicht oder überschritten wird. Die zweite Referenzspannung wird durch eine zweite Referenzstromquelle 36 an einem zweiten Referenz-Widerstand 37 gegenüber der Ausgangsspannung V_{OUT} des Abwärts-Wandlers 3 angelegt. Um hohe Verlustleistungen zu vermeiden, sollte der Strom der beiden Referenzstromquellen 33, 36 im µA-Bereich liegen. Die Dimensionierung der Referenz- Widerstände 34, 37 kann davon ausgehend beispielsweise im 100kQ-Bereich liegen.

Der Ausgang des ersten Komparators 32 ist mit dem Set-Eingang eines Flipflops 38 und mit einem ersten Eingang IN-1 einer digitalen Steuerung 39 verbunden. Der Ausgang des zweiten Komparators 35 ist mit einem zweiten Eingang IN-2 der digitalen Steuerung 39 verbunden. Ein Ausgang OUT der digitalen Steuerung 39 ist mit dem Reset-Eingang des Flipflops 38 verbunden. Die digitale Steuerung 39 umfasst Rechenmittel und einen Zeitnehmer in Form einer hochfrequenten Uhr. Die Frequenz der Uhr muss hoch im Vergleich zur maximalen Schaltfrequenz des Abwärts-Wandlers 3 sein. Wenn beispielsweise der Wandler 3 mit einer Frequenz bis zu 2 MHz schalten kann, sollte die Frequenz der Uhr 200 MHz oder höher sein, um keine signifikanten Fehler bei der Zeitmessung einzuführen. Die Rechenmittel der digitalen Steuerung 39 umfassen die oben erläuterten Zähler, d.h. einen Umschaltzähler und einen Ausgleichszähler, und sind zur Durchführung des beschriebenen Verfahrens eingerichtet. In Abhängigkeit von den an den Eingängen der digitalen Steuerung von den Komparatoren 32, 35 empfangenen Signalen können sie die Zähler inkrementieren, die Zählrichtung umschalten, dekrementieren und zurücksetzen sowie in Abhängigkeit vom Zählerstand ein Signal am Ausgang für das Flipflop 38 anlegen. Der Ausgang Q des Flipflops 38 ist über einen Gate-Treiber 40 mit dem Schalter 7, z.B. mit dessen Gate im Fall eines FETs, verbunden, sodass der Schalter 7 je nach Signal am Ausgang Q des Flipflops 38 ein- oder ausgeschaltet ist.

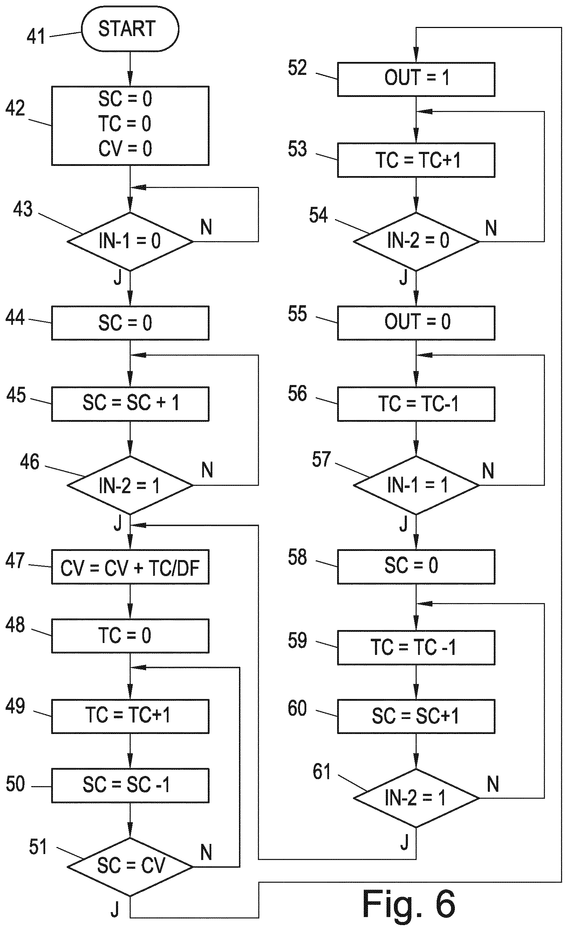

In Fig. 6 ist in einem Ablaufdiagramm ein mit der Schaltung gemäß Fig. 5 möglicher Verfahrensablauf veranschaulicht, welcher nunmehr im Detail erläutert werden soll.

Im Ablaufdiagramm gemäß Fig. 6 erfolgt nach einem Startfeld 41 ein Rücksetzen eines in der digitalen Steuerung 39 gemäß Fig. 5 realisierten Schalt-Zählers SC (SC - Switch Counter) sowie eines Dreiecks-Zählers TC (TC - Triangle Counter) und ferner eines Korrekturwerts CV (CV - Correction Value). Nach diesem Rücksetz-Block 42 wird gemäß einem Abfragefeld 43 abgefragt, ob der Strom bereits gleich dem bzw. oberhalb des ersten Schwellwerts bzw. Referenzwerts ist ((IN-1)=0?); falls dies nicht der Fall ist, wird zum Eingang des Abfragefelds 43 zurückgekehrt, und diese Abfrage wird wiederholt, bis das Abfrage-Ergebnis positiv ist. Danach, wenn somit festgestellt wurde, dass der Strom oberhalb des ersten Schwellwerts ist, wird gemäß Block 44 das Flipflop 38 gemäß Fig. 5 auf "Ein" geschaltet und SC auf 0 gesetzt. Im nächsten Block 45 wird der Wert SC um "1" erhöht, und es wird gemäß dem Abfragefeld 46 abgefragt, ob nun der Strom bereits oberhalb des zweiten Schwellwerts bzw. Referenzwerts liegt, d.h. (IN-2)=1?. Wenn "nein", d.h. wenn der Strom zwischen dem ersten Schwellwert und dem zweiten Schwellwert liegt, wird zum Eingang des Blocks 45 zurückgekehrt, um den Schalt-Zähler SC neuerlich um "1" zu inkrementieren. Im anderen Fall wird jedoch gemäß Block 47 der Korrekturwert CV um einen Betrag TC/DF erhöht, wobei DF ein fixer Dämpfungsfaktor ist, der in der digitalen Steuerung 39 abgespeichert ist. Danach wird gemäß Block 48 der Dreieck-Zähler TC auf "0" gesetzt, und gemäß Block 49 wird dann dieser Zähler TC um "1" inkrementiert, wonach gemäß Block 50 der Schaltzähler SC um "1" dekrementiert wird. Sodann wird gemäß dem Abfragefeld 51 abgefragt, ob die Werte SC und CV gleich sind, d.h. ob die Abschaltzeit bereits erreicht ist; wenn "nein", wird zum Block 49 zurückgekehrt, im anderen Fall jedoch wird gemäß einem Block 52 der Ausgang "Out" der digitalen Steuerung 39 gemäß Fig. 5 auf "1" gesetzt, was bedeutet, dass die Abschaltzeit erreicht ist, und ab diesem Zeitpunkt Verzögerungen gemäß der Schalttechnik erzeugt werden. Dadurch wird an dem mit dem Ausgang "Out" verbundenen Reset-Eingang R des Flipflops 38 ein Signal angelegt und somit der Ausgang Q des Flipflops 38 auf "0" (d.h. "AUS") gesetzt und der Schalter 7 über den mit dem Ausgang Q des Flipflops 38 verbundenen Gate-Treiber 40 geöffnet bzw. ausgeschaltet.

Im Zusammenhang damit wird gemäß Block 53 der Zählerwert TC um "1" inkrementiert, und im Abfragefeld 54 wird abgefragt, ob der Wert (IN-2) am Eingang der digitalen Steuerung 39 gleich "0" ist, was bedeutet, dass abgefragt wird, ob der Strom bereits unterhalb des zweiten Schwellwerts liegt. Wenn "nein", wird zum Block 53 zurückgekehrt; andernfalls wird gemäß Block 55 nunmehr der Ausgang "Out" der digitalen Steuerung 39 auf "0" gesetzt, was bedeutet, dass der Reset-Eingang R des Flipflops 38 auf "0" (d.h. "AUS") gesetzt wird oder auf "0" ("AUS") bleibt. Danach wird gemäß Block 56 im Ablaufdiagramm gemäß Fig. 6 der Wert TC um "1" dekrementiert, und gemäß dem Abfragefeld 57 wird nun abgefragt, ob der Wert am Eingang (IN-1)=1 ist, d.h. ob der Strom bereits unterhalb des ersten Schwellwerts liegt. Wenn "nein", wird zum Block 56 zurückgekehrt, ansonsten wird gemäß Block 58 der Wert SC für den Schalt-Zähler auf "0" gesetzt, wobei hier gilt, dass der Strom unter dem ersten Schwellwert liegt und das Flipflop 38 auf "Ein" geschaltet wird. Danach wird gemäß Block 59 der Wert TC um "1" dekrementiert, und gemäß Block 60 wird der Wert SC um "1" inkrementiert. Sodann wird gemäß dem Abfragefeld 61 abgefragt, ob der Eingang (IN-2)=1 ist, d.h. ob der Strom bereits oberhalb des zweiten Schwellwerts liegt. Wenn "nein", wird zum Eingang des Blocks 59 übergegangen; ansonsten (Ausgang "ja") ist die Feststellung, dass der Strom oberhalb des zweiten Schwellwerts liegt, und es wird im gegebenen Fall zum Eingang des Blocks 47 zurückgekehrt, um eine nächste Schleife zu durchlaufen.

Ausgehend von dem obigen Beispiel kann der Fachmann selbstverständlich eine äquivalente Schaltung vorsehen, bei der der erste Referenzwert dem oberen Grenzwert 10 des Hysteresebereichs 11 entspricht (s. Fig. 4), wobei in Fig. 5 lediglich die erste Referenzstromquelle 33 und/oder der erste Referenz-Widerstand 34 angepasst werden muss. Außerdem würde bei einer solchen äquivalenten Lösung vorzugsweise immer (vom ersten Zyklus an) das Überschreiten (Bedingung IN-1'=0) und niemals das Unterschreiten des oberen Grenzwerts 10 abgewartet werden, während bei dem oben beschriebenen Ablauf im ersten Zyklus das Überschreiten (Bedingung IN-1=0) und ab dann vorzugsweise immer nur das Unterschreiten (Bedingung IN-1=1) des unteren Grenzwerts 9 abgewartet wird. Hinsichtlich des zweiten Referenzwerts wird in beiden Situationen sowohl das das Überschreiten (Bedingung IN-2=1) als auch das Unterschreiten (Bedingung IN-2=0) überwacht. Außerdem kann der Fachmann ohne erfinderisches zu tun, die digitale Steuerung 39 so anpassen, dass beliebige Referenzwerte verwendet werden können, ohne den Rahmen der Erfindung zu verlassen. Beides ist insbesondere dann von Vorteil, wenn der Abwärts-Wandler 3 im DCM (discontinous conduction mode) betrieben werden soll, während die detaillierte Ausführung davor einen Abwärts-Wandler 3 beschreibt, der implizit eben dieses verhindert.

Auch kann der Fachmann, ohne erfinderisch tätig werden zu müssen, den Ablauf der digitalen Steuerung 39 anpassen, um ein anderes Regelverhalten zur Mittelwertskorrektur, also zum Verändern der Zeitverzögerung nach dem zweiten Referenzzeitpunkt, zu erreichen.

### Bezugszeichenliste

- 1: Gleichspannungswandler-Kette
- 2: Aufwärts-Wandler (Boost-Konverter)
- 3: Abwärts-Wandler (Buck-Konverter)
- 4: Netzspannung
- 5: Versorgungsspannung
- 6: Ausgangsstrom
- 7: Schalter des Abwärts-Wandlers
- 8: Zeitlicher Verlauf des Ausgangsstroms
- 9: unterer Grenzwert (konstant)
- 10: oberer Grenzwert (konstant)
- 11: Hysteresebereich (konstant)
- 12: Ladeabschnitt
- 13: Entladeabschnitt
- 14: Zweiter Ladeabschnitt
- 15: Zweiter Entladeabschnitt
- 16: Umkehrpunkt
- 17: Stromverlauf
- 18: Shunt-Widerstand
- 19: Vorgabewert
- 20, 21: erste Referenzzeitpunkte
- 22-26: zweite Referenzzeitpunkte
- 27: Bereich des Stromverlaufs oberhalb des Vorgabewerts
- 28: Bereich des Stromverlaufs unterhalb des Vorgabewerts
- 29: Unkorrigierter Stromverlauf
- 30: Differenz der Zeitspannen oberhalb bzw. unterhalb des Vorgabewerts
- 31: Vorrichtung
- 32: Erster Komparator
- 33: Erste Referenzstromquelle
- 34: Erster Referenz-Widerstand
- 35: Zweiter Komparator
- 36: Zweite Referenzstromquelle
- 37: Zweiter Referenz-Widerstand
- 38: Flipflop
- 39: Digitale Steuerung
- 40: Gate-Treiber
- 41-61: Anweisungen und Verzweigungen im Ablaufdiagramm

## Patentansprüche

1. Verfahren zur Hysterese-Regelung eines Ausgangsstroms eines Gleichspannungswandlers (3) auf einen Vorgabewert (19) für einen mittleren Ausgangsstrom und innerhalb eines Hysteresebereichs (11), wobei der Ausgangsstrom (6) gemessen und mit einem ersten und zweiten Referenzwert verglichen wird, wobei ein Schalter (7) des Gleichspannungswandlers (3) abhängig von einem ersten Referenzzeitpunkt (20), zu dem der Ausgangsstrom (6) den ersten Referenzwert erreicht, und einem zweiten Referenzzeitpunkt (24), zu dem der Ausgangsstrom den zweiten Referenzwert erreicht, an den Grenzen des Hysteresebereichs (11) umgeschaltet wird, **dadurch gekennzeichnet, dass** der Schalter (7) mit einer Zeitverzögerung nach dem zweiten Referenzzeitpunkt (24) umgeschaltet wird, wobei die Zeitverzögerung in Abhängigkeit von einer Zeitdifferenz zwischen dem ersten Referenzzeitpunkt (20) und dem zweiten Referenzzeitpunkt (24) so gewählt wird, dass eine Zeitspanne, während der der Ausgangsstrom (6) höher als der Vorgabewert (19) ist, und eine Zeitspanne, während der der Ausgangsstrom (6) niedriger als der Vorgabewert (19) ist, ausgeglichen wird.

2. Verfahren nach Anspruch 1, **dadurch gekennzeichnet, dass** die Zeitverzögerung als im Wesentlichen gleich der gemessenen Zeitdifferenz ermittelt wird und zum Ausgleich einer Zeitspanne, während der der Ausgangsstrom (6) höher als der Vorgabewert (19) ist, und einer Zeitspanne, während der der Ausgangsstrom (6) niedriger als der Vorgabewert (19) ist, geändert wird.

3. Verfahren nach Anspruch 1, **dadurch gekennzeichnet, dass** die Zeitverzögerung durch lineare Extrapolation der Stromänderung des Ausgangsstroms (6) ausgehend von dem zweiten Referenzzeitpunkt (24) und in Abhängigkeit von der gemessenen Zeitdifferenz, den beiden Referenzwerten des Ausgangsstroms (6) und einem vorgegebenen Grenzwert des Hysteresebereichs (11) ermittelt wird und zum Ausgleich einer Zeitspanne, während der der Ausgangsstrom (6) höher als der Vorgabewert (19) ist, und einer Zeitspanne, während der der Ausgangsstrom (6) niedriger als der Vorgabewert (19) ist, geändert wird.

4. Verfahren nach einem der Ansprüche 1 bis 3, **dadurch gekennzeichnet, dass** die Zeitdifferenzen zwischen sämtlichen während eines vollständigen Zyklus des Gleichspannungswandlers (3) erreichten Referenzzeitpunkten (22, 23, 20, 24), zu denen der Ausgangsstrom (6) den jeweiligen Referenzwert erreicht, gemessen werden und aus den gemessenen Zeitdifferenzen, den beiden Referenzwerten und dem Vorgabewert (19) für den mittleren Ausgangsstrom eine erste Zeitspanne, während der der Ausgangsstrom (6) höher als der Vorgabewert (19) war, und eine zweite Zeitspanne, während der der Ausgangsstrom (6) niedriger als der Vorgabewert (19) war, ermittelt werden, wobei die Zeitverzögerung im folgenden Zyklus so geändert wird, dass eine Differenz zwischen der ersten und zweiten Zeitspanne ausgeglichen wird.

5. Verfahren nach einem der Ansprüche 1 bis 4, **dadurch gekennzeichnet, dass** der zweite Referenzwert dem Vorgabewert (19) des Ausgangsstroms entspricht.

6. Verfahren nach einem der Ansprüche 1 bis 5, **dadurch gekennzeichnet, dass** der erste Referenzwert einem unteren Grenzwert (9) des Hysteresebereichs (11) entspricht, wobei eine Überquerung einer Untergrenze des Hysteresebereichs (11) dem ersten Referenzzeitpunkt (20) entspricht und der Umschaltzeitpunkt an einer Obergrenze des Hysteresebereichs (11) aus der Zeitdifferenz zwischen dem zweiten Referenzzeitpunkt (24) und dem ersten Referenzzeitpunkt (20) sowie der Stromdifferenz zwischen dem zweiten Referenzwert und dem unteren Grenzwert (9) des Hysteresebereichs (11) ermittelt wird.

7. Verfahren nach einem der Ansprüche 1 bis 5, **dadurch gekennzeichnet, dass** der erste Referenzwert einem oberen Grenzwert (10) des Hysteresebereichs (11) entspricht, wobei eine Überquerung einer Obergrenze des Hysteresebereichs (11) dem ersten Referenzzeitpunkt entspricht und der Umschaltzeitpunkt an einer Untergrenze des Hysteresebereichs (11) aus der Zeitdifferenz zwischen dem zweiten Referenzzeitpunkt und dem ersten Referenzzeitpunkt sowie der Stromdifferenz zwischen dem oberen Grenzwert des Hysteresebereichs (11) und dem zweiten Referenzwert ermittelt wird.

8. Vorrichtung zur Durchführung des Verfahrens nach einem der Ansprüche 1 bis 7, mit Messmitteln zur Überwachung des Ausgangsstroms (6) des Gleichspannungswandlers (3) und mit Schaltmitteln zum Umschalten eines Schalters (7) des Gleichspannungswandlers (3), wobei die Messmittel mit Vergleichsmitteln zum Vergleichen des gemessenen Ausgangsstroms mit einem ersten und einem zweiten Referenzwert verbunden sind, wobei die Vergleichsmittel eingerichtet sind, ein Erreichen des ersten oder zweiten Referenzwerts zu signalisieren, **dadurch gekennzeichnet, dass** die Vergleichsmittel mit einem Zeitnehmer verbunden sind, welcher zur Ermittlung einer Zeitdifferenz zwischen den Signalen der Vergleichsmitteln eingerichtet ist, wobei der Zeitnehmer mit Rechenmitteln verbunden ist, welche zur Berechnung einer Zeitverzögerung in Abhängigkeit von der ermittelten Zeitdifferenz eingerichtet sind, nach deren Ablauf der Schalter (7) umzuschalten ist, sodass eine Zeitspanne, während der der Ausgangsstrom höher als der Vorgabewert (19) ist, und eine Zeitspanne, während der der Ausgangsstrom niedriger als der Vorgabewert (19) ist, ausgeglichen wird, und wobei die Rechenmittel mit den Schaltmitteln verbunden sind, sodass der Schalter (7) des Gleichspannungswandlers (3) nach Ablauf der berechneten Zeitverzögerung umgeschaltet werden kann.

9. Vorrichtung nach Anspruch 8, **dadurch gekennzeichnet, dass** die Rechenmittel zur linearen Extrapolation der Stromänderung des Ausgangsstroms (6) eingerichtet sind.

10. Vorrichtung nach Anspruch 8 oder 9, **dadurch gekennzeichnet, dass** die Rechenmittel zur Speicherung sämtlicher während eines vollständigen Zyklus des Gleichspannungswandlers (3) ermittelter Zeitdifferenzen zwischen den Signalen der Vergleichsmittel eingerichtet sind und eingerichtet sind, aus den ermittelten Zeitdifferenzen, den beiden Referenzwerten und dem Vorgabewert für den mittleren Ausgangsstrom eine erste Zeitspanne, während der der Ausgangsstrom (6) höher als der Vorgabewert (19) war, und eine zweite Zeitspanne, während der der Ausgangsstrom (6) niedriger als der Vorgabewert (19) war, zu ermitteln und die Zeitverzögerung im folgenden Zyklus so zu ändern, dass eine Differenz zwischen der ersten und zweiten Zeitspanne ausgeglichen wird.

11. Vorrichtung nach einem der Ansprüche 8 bis 10, **dadurch gekennzeichnet, dass** der zweite Referenzwert dem Vorgabewert (19) des Ausgangsstroms (6) entspricht.

12. Vorrichtung nach einem der Ansprüche 8 bis 11, **dadurch gekennzeichnet, dass** der erste Referenzwert einem unteren Grenzwert (9) des Hysteresebereichs (11) entspricht.

13. Vorrichtung nach einem der Ansprüche 8 bis 11, **dadurch gekennzeichnet, dass** der erste Referenzwert einem oberen Grenzwert (10) des Hysteresebereichs (11) entspricht.

## Claims

1. Method for controlling the hysteresis of an output current from a DC-DC converter (3) to a default value (19) for an average output current and within a hysteresis range (11), wherein the output current (6) is measured and is compared with a first and a second reference value, wherein a switch (7) of the DC-DC converter (3) is changed over at the limits of the hysteresis range (11) on the basis of a first reference time (20), at which the output current (6) reaches the first reference value, and a second reference time (24), at which the output current reaches the second reference value, **characterized in that** the switch (7) is changed over with a time delay after the second reference time (24), wherein the time delay is selected on the basis of a time difference between the first reference time (20) and the second reference time (24) in such a manner that a period of time during which the output current (6) is higher than the default value (19) and a period of time during which the output current (6) is lower than the default value (19) are compensated for.

2. Method according to Claim 1, **characterized in that** the time delay is determined as being substantially identical to the measured time difference and is changed in order to compensate for a period of time during which the output current (6) is higher than the default value (19) and a period of time during which the output current (6) is lower than the default value (19).

3. Method according to Claim 1, **characterized in that** the time delay is determined by means of linear extrapolation of the current change of the output current (6), based on the second reference time (24) and on the basis of the measured time difference, the two reference values of the output current (6), and a predetermined limit value of the hysteresis range (11), and is changed in order to compensate for a period of time during which the output current (6) is higher than the default value (19) and a period of time during which the output current (6) is lower than the default value (19).

4. Method according to one of Claims 1 to 3, **characterized in that** the time differences between all of the reference times (22, 23, 20, 24) which are reached during a complete cycle of the DC-DC converter (3), at which reference times the output current (6) reaches the respective reference value, are measured, and a first period of time during which the output current (6) was higher than the default value (19) and a second period of time during which the output current (6) was lower than the default value (19) are determined from the measured time differences, the two reference values, and the default value (19) for the average output current, wherein the time delay is changed in such a manner in the following cycle that a difference between the first and the second period of time is compensated for.

5. Method according to one of Claims 1 to 4, **characterized in that** the second reference value corresponds to the default value (19) of the output current.

6. Method according to one of Claims 1 to 5, **characterized in that** the first reference value corresponds to a lower limit value (9) of the hysteresis range (11), wherein a crossing of a lower limit of the hysteresis range (11) corresponds to the first reference time (20), and the changeover time at an upper limit of the hysteresis range (11) is determined from the time difference between the second reference time (24) and the first reference time (20) as well as the current difference between the second reference value and the lower limit value (9) of the hysteresis range (11).

7. Method according to one of Claims 1 to 5, **characterized in that** the first reference value corresponds to an upper limit value (10) of the hysteresis range (11), wherein a crossing of an upper limit of the hysteresis range (11) corresponds to the first reference time, and the changeover time at a lower limit of the hysteresis range (11) is determined from the time difference between the second reference time and the first reference time as well as the current difference between the upper limit value of the hysteresis range (11) and the second reference value.

8. Apparatus for carrying out the method according to one of Claims 1 to 7, comprising measuring means for monitoring the output current (6) of the DC-DC converter (3) and comprising switching means for changing over a switch (7) of the DC-DC converter (3), wherein the measuring means are connected to comparing means for comparing the measured output current with a first and a second reference value, **characterized in that** the comparing means are equipped to signal a reaching of the first or second reference value, **characterized in that** the comparing means are connected to a timer, which is equipped to determine a time difference between the signals of the comparing means, wherein the timer is connected to calculating means, which are equipped to calculate a time delay on the basis of the determined time difference, after the end of which time delay the switch (7) is to be changed over, so that a period of time during which the output current is higher than the default value (19) and a period of time during which the output current is lower than the default value (19) are compensated for, and wherein the calculating means are connected to the switching means, so that the switch (7) of the DC-DC converter (3) can be changed over after the end of the calculated time delay.

9. Apparatus according to Claim 8, **characterized in that** the calculating means are equipped for the linear extrapolation of the current change of the output current (6).

10. Apparatus according to Claim 8 or 9, **characterized in that** the calculating means are equipped to store all of the time differences between the signals of the comparing means, which time differences are determined during a complete cycle of the DC-DC converter (3), and the calculating means are equipped to determine a first period of time during which the output current (6) was higher than the default value (19) and a second period of time during which the output current (6) was lower than the default value (19) from the determined time differences, the two reference values; and the default value for the average output current, and to change the time delay in the following cycle in such a manner that a difference between the first and the second period of time is compensated for.

11. Apparatus according to one of Claims 8 to 10, **characterized in that** the second reference value corresponds to the default value (19) of the output current (6).

12. Apparatus according to one of Claims 8 to 11, **characterized in that** the first reference value corresponds to a lower limit value (9) of the hysteresis range (11).

13. Apparatus according to one of Claims 8 to 11, **characterized in that** the first reference value corresponds to an upper limit value (10) of the hysteresis range (11).

## Revendications

1. Procédé de régulation par hystérésis d'un courant de sortie d'un convertisseur de tension continue (3) à une valeur spécifiée (19) pour un courant de sortie moyen et à l'intérieur d'une plage d'hystérésis (11), le courant de sortie (6) étant mesuré et comparé à une première et une deuxième valeur de référence, un commutateur (7) du convertisseur de tension continue (3) étant inversé aux limites de la plage d'hystérésis (11) en fonction d'un premier instant de référence (20), auquel le courant de sortie (6) atteint la première valeur de référence, et d'un deuxième instant de référence (24), auquel le courant de sortie atteint la deuxième valeur de référence, **caractérisé en ce que** le commutateur (7) est inversé avec un retard dans le temps après le deuxième instant de référence (24), le retard dans le temps étant choisi en fonction d'une différence de temps entre le premier instant de référence (20) et le deuxième instant de référence (24) de telle sorte qu'un intervalle de temps pendant lequel le courant de sortie (6) est supérieur à la valeur spécifiée (19) et un intervalle de temps pendant lequel le courant de sortie (6) est inférieur à la valeur spécifiée (19) sont équilibrés.

2. Procédé selon la revendication 1, **caractérisé en ce que** le retard dans le temps est déterminé comme étant sensiblement égal à la différence de temps mesurée et est modifié en vue d'équilibrer un intervalle de temps pendant lequel le courant de sortie (6) est supérieur à la valeur spécifiée (19) et un intervalle de temps pendant lequel le courant de sortie (6) est inférieur à la valeur spécifiée (19).

3. Procédé selon la revendication 1, **caractérisé en ce que** le retard dans le temps est déterminé par extrapolation linéaire de la variation du courant de sortie (6) à partir du deuxième instant de référence (24) et en fonction de la différence de temps mesurée, des deux valeurs de référence du courant de sortie (6) et d'une valeur limite prédéfinie de la plage d'hystérésis (11) et est modifié en vue d'équilibrer un intervalle de temps pendant lequel le courant de sortie (6) est supérieur à la valeur spécifiée (19) et un intervalle de temps pendant lequel le courant de sortie (6) est inférieur à la valeur spécifiée (19).

4. Procédé selon l'une des revendications 1 à 3, **caractérisé en ce que** les différences de temps entre tous les instants de référence (22, 23, 20, 24) atteints pendant un cycle complet du convertisseur de tension continue (3) et celui auquel le courant de sortie (6) atteint la valeur de référence correspondante sont mesurées, et un premier intervalle de temps, pendant lequel le courant de sortie (6) était supérieur à la valeur spécifiée (19), et un deuxième intervalle de temps, pendant lequel le courant de sortie (6) était inférieur à la valeur spécifiée (19), sont déterminés à partir des différences de temps mesurées, des deux valeurs de référence et de la valeur spécifiée (19) pour le courant de sortie moyen, le retard dans le temps dans le cycle suivant étant modifié de telle sorte qu'une différence entre le premier et le deuxième intervalle de temps est équilibrée.

5. Procédé selon l'une des revendications 1 à 4, **caractérisé en ce que** la deuxième valeur de référence correspond à la valeur spécifiée (19) du courant de sortie.

6. Procédé selon l'une des revendications 1 à 5, **caractérisé en ce que** la première valeur de référence correspond à une valeur limite inférieure (9) de la plage d'hystérésis (11), un franchissement d'une limite inférieure de la plage d'hystérésis (11) correspondant au premier instant de référence (20) et l'instant d'inversion au niveau d'une limite supérieure de la plage d'hystérésis (11) étant déterminé à partir de la différence de temps entre le deuxième instant de référence (24) et le premier instant de référence (20) ainsi que de la différence de courant entre la deuxième valeur de référence et la valeur limite inférieure (9) de la plage d'hystérésis (11).

7. Procédé selon l'une des revendications 1 à 5, **caractérisé en ce que** la première valeur de référence correspond à une valeur limite supérieure (10) de la plage d'hystérésis (11), un franchissement d'une limite supérieure de la plage d'hystérésis (11) correspondant au premier instant de référence et l'instant d'inversion au niveau d'une limite inférieure de la plage d'hystérésis (11) étant déterminé à partir de la différence de temps entre le deuxième instant de référence et le premier instant de référence ainsi que de la différence de courant entre la valeur limite supérieure de la plage d'hystérésis (11) et la deuxième valeur de référence.

8. Dispositif pour mettre en oeuvre le procédé selon l'une des revendications 1 à 7, comprenant des moyens de mesure destinés à surveiller le courant de sortie (6) du convertisseur de tension continue (3) et comprenant des moyens de commutation destinés à inverser un commutateur (7) du convertisseur de tension continue (3), les moyens de mesure étant reliés à des moyens de comparaison servant à comparer le courant de sortie mesuré à une première et une deuxième valeur de référence, les moyens de comparaison étant conçus pour signaler lorsque la première ou la deuxième valeur de référence est atteinte, **caractérisé en ce que** les moyens de comparaison sont reliés à un chronométreur qui est conçu pour déterminer une différence de temps entre les signaux des moyens de comparaison, le chronométreur étant relié à des moyens de calcul qui sont conçus pour calculer, en fonction de la différence de temps déterminée, un retard dans le temps après l'écoulement duquel doit avoir lieu l'inversion du commutateur (7) de sorte qu'un intervalle de temps pendant lequel le courant de sortie est supérieur à la valeur spécifiée (19) et un intervalle de temps pendant lequel le courant de sortie est inférieur à la valeur spécifiée (19) soient équilibrés, et les moyens de calcul étant reliés aux moyens de commutation de telle sorte que le commutateur (7) du convertisseur de tension continue (3) puisse être inversé après l'écoulement du retard dans le temps calculé.

9. Dispositif selon la revendication 8, **caractérisé en ce que** les moyens de calcul sont conçus pour l'extrapolation linéaire de la variation du courant de sortie (6).

10. Dispositif selon la revendication 8 ou 9, **caractérisé en ce que** les moyens de calcul sont conçus pour mettre en mémoire toutes les différences de temps entre les signaux des moyens de comparaison déterminées pendant un cycle complet du convertisseur de tension continue (3), et sont conçus pour déterminer un premier intervalle de temps, pendant lequel le courant de sortie (6) était supérieur à la valeur spécifiée (19), et un deuxième intervalle de temps, pendant lequel le courant de sortie (6) était inférieur à la valeur spécifiée (19), à partir des différences de temps déterminées, des deux valeurs de référence et de la valeur spécifiée pour le courant de sortie moyen, et modifier le retard dans le temps dans le cycle suivant de telle sorte qu'une différence entre le premier et le deuxième intervalle de temps est équilibrée.

11. Dispositif selon l'une des revendications 8 à 10, **caractérisé en ce que** la deuxième valeur de référence correspond à la valeur spécifiée (19) du courant de sortie (6).

12. Dispositif selon l'une des revendications 8 à 11, **caractérisé en ce que** la première valeur de référence correspond à une valeur limite inférieure (9) de la plage d'hystérésis (11).

13. Dispositif selon l'une des revendications 8 à 11, **caractérisé en ce que** la première valeur de référence correspond à une valeur limite supérieure (10) de la plage d'hystérésis (11).
